Europäisches Patentamt

European Patent Office

Office européen des brevets

(11) Publication number : **0 511 172 A1**

(12) # EUROPEAN PATENT APPLICATION

(21) Application number : **92830089.6**

(22) Date of filing : **27.02.92**

(51) Int. Cl.⁵ : **B65G 47/51,** B65G 1/04, B67C 7/00

(30) Priority : **17.04.91 IT PR910017**
**25.06.91 IT PR910026**

(43) Date of publication of application :
**28.10.92 Bulletin 92/44**

(84) Designated Contracting States :
**DE ES FR GB**

(71) Applicant : **Lanfranchi, Lino**
**Via Milano, 8**
**I-43044 Collecchio, Parma (IT)**

(72) Inventor : **Lanfranchi, Lino**
**Via Milano, 8**
**I-43044 Collecchio, Parma (IT)**

(74) Representative : **Lanzoni, Luciano**
**BUGNION S.p.A. Via Emilia Est, 25**
**I-41100 Modena (IT)**

(54) **Ordered storage chest for plastic containers.**

(57)    The invention relates to the field of storage chests for containers. More precisely, it relates to an ordered storage chest for plastic containers (5) comprising a plurality of vertical chambers (11) in which the containers (5) are piled in the upright position. The storage chest (10) comprises means to perform the loading and unloading of the said chambers (11) through the inferior opening of the said chambers (11). Each said chamber (11) comprises a first semipart (11a) and a second semipart (11b) separated between themselves, respectively constrained to at least a first and at least a second support frame (43a and 43b) arranged internally to a support mounting (41) and mobile according to pre-established directions.

fig.3

EP 0 511 172 A1

fig.6

The invention relates to ordered storage chests for plastic containers.

In bottling plants, because of the considerable velocity or production capacity of filling machines, the presence of storage chests for containers upstream of the filling machines becomes necessary.

In the case of plastic containers, such as for example bottles made of PET or PVC, the use of non-ordered storage chests is widespread, in which the containers are housed in bulk.

Such storage chests, however, incur the need for special orienting and aligning machines to provide correctly aligned containers in the upright position at the entrance to the filler machine.

The prior art embraces also ordered storage machines, in which the containers are housed, in the upright position, in a plurality of identical vertical chambers arranged according to a matrix configuration of m rows and n columns.

This latter type of ordered storage chest though avoiding the presence of orienting and aligning machines, presents some drawbacks.

Since the loading occurs from above, by means of a sliding upper car, while the unloading is done from below by means of a lower car, sufficient space must be provided both above and below the storage chest to allow for the movements of the said loading and unloading means, consequently limiting the collection capacity of the storage chest.

Further drawbacks are represented by the need to perform checks and possibly maintenance operations and repair also on parts which are not easily accessible, such as the upper loading means, and by the need to provided a system of transport for the containers towards the top of the storage chest.

A still further drawback is the fact that the chambers or vertical tubes, being superiorly open, allow the infiltration of dust or other polluting agents to the containers.

In prior art storage chests the vertical chambers have pre-established and rigid dimensions able to house containers of a preestablished shape and thus it is necessary to have several storage chests at hand, each of which is suitable for a particular shape of container. This brings about the need for much space, as well as incurring high installation costs.

One aim of the present invention is to eliminate the above-described drawbacks by simplifying the overall structure of the storage chests and unifying the loading and unloading means in such a way as to increase the total storage capacity of the storage chest.

A further aim is to provide a storage chest having lower costs but having the same storage capacity as those of the prior art.

A further aim is to obtain better hygienic conditions inside the said chambers of the storage chest, and simpler maintenance, both of the storage chest and of the loading and unloading means.

A still further aim is to provide a storage chest which permits of storing containers of differing shapes.

The said aims are fully attained by the ordered storage chest for plastic containers, object of the present invention, comprising a plurality of identical vertical chambers arranged according to a matrix configuration and destined to house a plurality of plastic containers piled in upright position, characterised by the fact that it comprises means to perform the loading and unloading of one or more rows of chambers through the inferior opening of the said chambers.

The storage chest is also characterised by the fact that each vertical chamber comprises a first semi-part and a second semi-part, separate between themselves, and respectively fixed to at least a first and at least a second support frame, both arranged internally to a support mounting, said support frames being mobile according to predetermined directions on command of activating means for the moving of the said first semipart and the said second semipart towards and away from each other.

These and other characteristics will better emerge from the detailed description that follows, of some preferred embodiments of the invention illustrated in the form of non-limiting examples in the accompanying illustrations, in which:

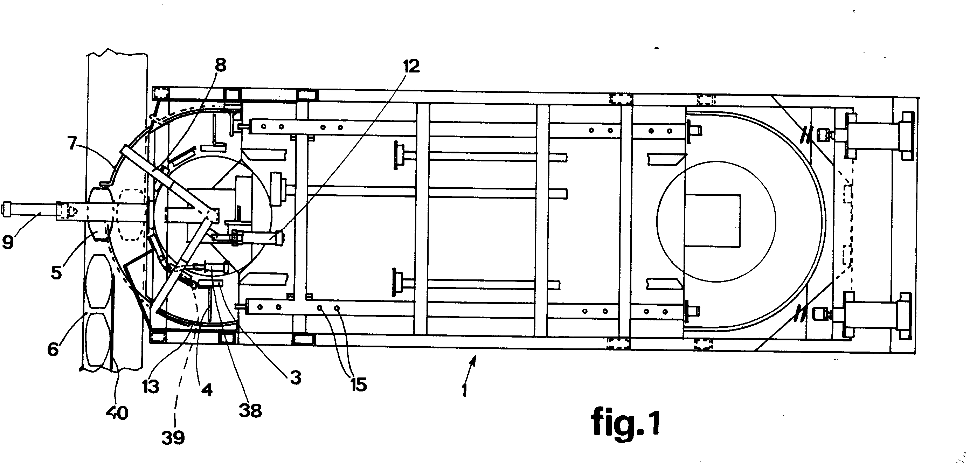

- Figure 1 shows, in plan form, the means for loading and unloading the storage chest;

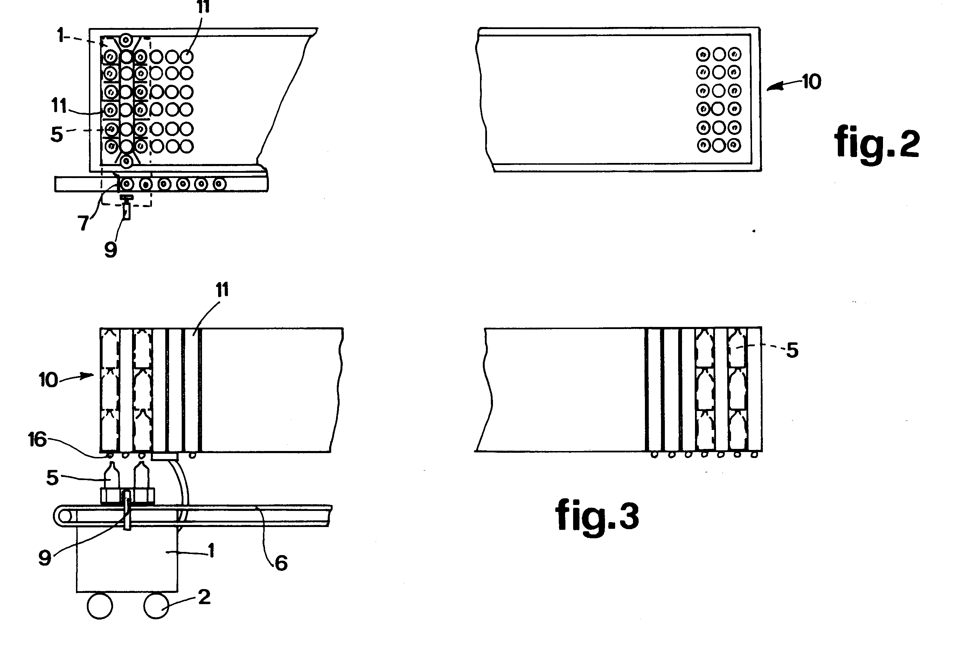

- Figures 2 and 3 schematically illustrate the storage chest with the loading and unloading means, respectively in plan view and in lateral view;
- Figure 4 shows, schematically and in plan view, the loading and unloading modalities according to another embodiment;
- Figure 5 shows, in a schematic plan view, partially sectioned, a feeding device for the storage chest, according to a further embodiment;
- Figure 6 shows, in a schematic view from above, the storage chest in an embodiment adaptable to various container shapes;
- Figures 7 and 8 show, in a schematic view from above, two further embodiments of the storage chest of figure 6.

With reference to the figures, 1 denotes a mobile car slidable by means of wheels 2 on a track (not illustrated).

The car supports superiorly a transporter 3 of the pallet 4 type, aimed at drawing a plurality of containers 5 which are preferably containers or bottles made of plastic, such as PET, PVC, or PE.

The car 1 is slidable beneath a storage chest 10 of containers 5, which storage chest 10 is constituted by a plurality of identical vertical chambers 11 arranged according to a matrix configuration of m rows and n columns.

The chambers 11 house the containers 5 piled in upright position, and are superiorly closed to avoid dust infiltration from above and to maintain better hygienic conditions inside the chambers 11 themselves.

The containers 5 originate from a conveyor belt 6 or from another system of known type.

The containers 5 arrive in the proximity of the car 1 aligned all on the same side of a dividing wall 40 positioned longitudinally about halfway across the said conveyor belt 6.

The containers 5 are halted in their advancement by a stop 7 constituted by a rotating mobile wall, commanded by a lever 8 pivoted on the car 1 and activated by a pneumatic cylinder 12.

A further mobile rotating wall 13 is solid to the said lever 8, which lever 8 closes the feeding zone of the car 1 when the stop 7 is in retracted, non-interfering position.

A pneumatic cylinder 9, applied solidly to the car 1 in front of the feeding zone of the said car 1, pushes each container 5 towards the transporter 3 of the car 1 with its stem, each container 5 having first been halted by the stop 7.

Between the feeding of two successive containers 5, the transporter 3 moves by one step in such a way as to arrive in front of the cylinder 9 with a free chamber comprised between two consecutive pallets 4.

The containers 5 can be unloaded from the transporter 3 of the car 1 by means of an extractor 38, essentially constituted by a pneumatic cylinder whose stem activates a guide or deviator 39.

The unloading occurs when the mobile wall 13, activated by the pneumatic cylinder 12, closes the feeding zone of the car 1, bringing itself into a substantially tangential position with respect to the dividing wall 40.

The containers 5, which in the loading phase all come from the same side of the dividing wall 40, in the unloading phase are restored to the conveyor belt 6 on the opposite side with respect to the said dividing wall 40.

The extractor 38 pushes the guide or deviator 39 in such a way as to deviate the path of the containers 5 on the transporter 3.

The containers 5 are thus channeled on the conveyor belt 6 and can run freely on the said belt 6, being no longer obstructed by the stop 7.

The stop 7 with the mobile wall 13, the cylinders 9 and 12, the extractor 38 and the guide or deviator 39, constitute means of feeding and unloading of the mobile car 1.

The transporter 3 of the car 1 describes a closed path constituted by two straight parallel sides connected to the ends of circumference arcs.

When the car 1 moves on the tracks, the two parallel sides of the transporter 3 are arranged beneath two corresponding parallel rows of chambers 11, possibly not contiguous, in such a way that each container 5 present on the transporter 3 of the mobile car 1 (between two successive pallets 4) can be positioned beneath the entrance to a relative chamber 11 of the storage chest.

The mobile car 1 is equipped, along the two parallel sides of the transporter 3, with a plurality of lifting rods 15, which rods 15 lift the containers 5 in order to insert them from below into the corresponding chambers 11.

The chambers 11 are inferiorly equipped, at the opening, with closing and opening organs for the said chambers, of known type, constituted by mobile closing bars 16, supported by an axle (not illustrated).

The said bars 16, which normally support the containers 5 piled above them, when moved permit of the introduction or the unloading of one container 5 for each chamber 11 involved.

The command lever mechanism of the said closing and opening organs is self-blocked in the presence of containers 5 in the chambers 11, while it is unblocked by a lever mechanism of known type, applied on the mobile car 1 instead of being solid to the storage chest.

The mobile car 1, together with the feeding and unloading means of the said car 1, constitute means for performing the loading and unloading of one or more rows of chambers 11 through the inferior opening of the said chambers 11.

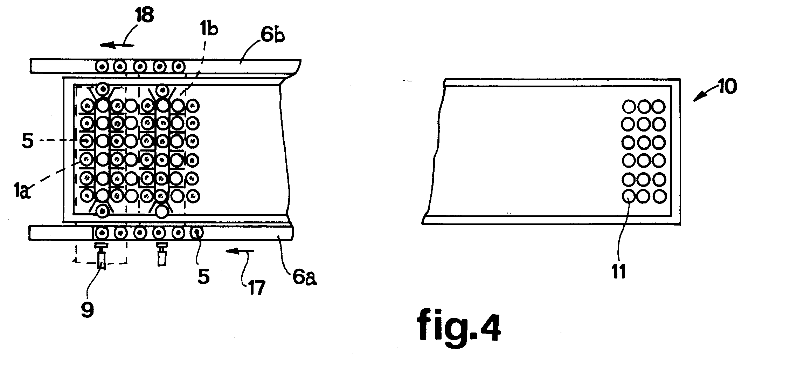

In figure 4 a further embodiment is illustrated which envisages the use of two mobile cars 1, one for the loading and one for the unloading, but even more cars 1 can be envisaged both for loading and for unloading.

In the illustrated example, car 1a performs the loading of containers 5 coming from a conveyor 6a, in the direction indicated by an arrow 17.

Car 1b performs the unloading of the containers 5 on to a conveyor 6b which advances in the direction indicated by an arrow 18.

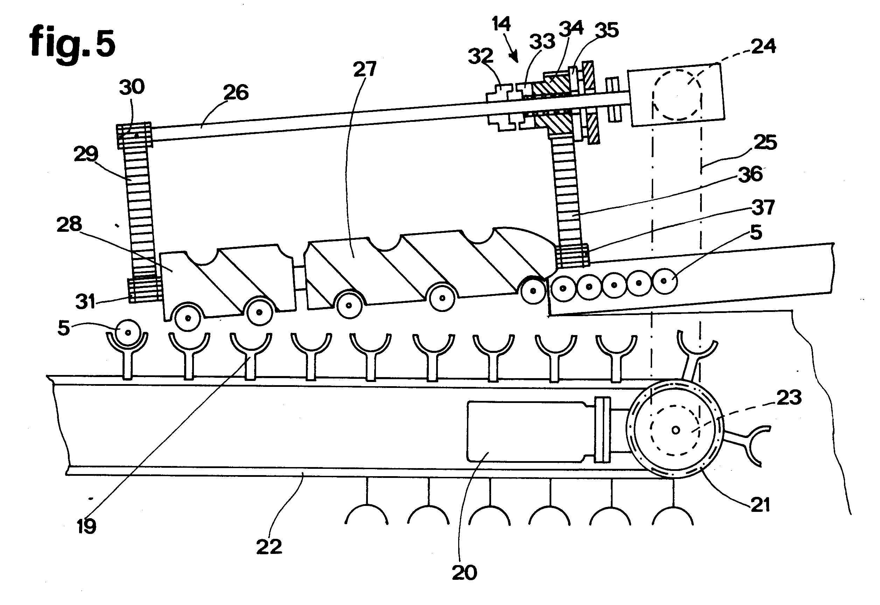

In figure 5, in which a further embodiment is illustrated, a feeding device for the storage chest is shown, with 20 denoting a geared motor which performs the activating of the said feeding device.

The geared motor 20 induces movement in a couple of crownwheels 21, of which only one is illustrated, with which a chain 22 meshes, which chain 22 is equipped with a plurality of drawing elements 19, each of which is destined to transport a container 5.

The drawing elements 19 are shaped substantially like a semicircular fork with an aperture diameter slightly higher than that of the diameter of the containers 5 to be housed.

The drawing elements 19 feed the transporter 3 of the mobile car 1 with the containers 5.

The geared motor 20 also sets a pinion 23 (coaxial to the crownwheel 21) in rotation, which pinion 23, by means of a chain 25 moves another pinion 24.

The pinion 24, by means of a transmission of known type and not illustrated, sets a shaft 26 in rotation.

An Archimedes screw device, constituted by a first screw 27 which draws its motion from an electromagnetic brake-clutch meshing device 14 applied on the shaft 26, and by a second screw 28 moved by means of a cogged chain 29, feeds the drawing elements 19 with containers 5 coming from the conveyor belt 6 or from another similar transport means.

The crown wheel 29 transmits movement of the shaft 26 to the second screw 28 through two pinions 30 and 31 associated respectively to the shaft 26 and to the second screw 28.

The meshing device 14 is constituted by a first clutch semijoint 32 keyed on the shaft 26 and by a second clutch semijoint 33 idle on the shaft 26 and solid to a cogged pulley 34 associated to an electromagnetic brake 35.

The cogged pulley 34 sets a pinion 37 in rotation, by means of a cogged belt 36, which pinion 37 moves the first screw 27.

The first and second screws 27 and 28 are coaxial, but their movement is independent.

When the geared motor 20 is active and the shaft 26 is placed in rotation, in working phase the two semijoints 32 and 33 are in fact coupled, causing the activation of the first screw (the second screw is always in rotation when the shaft 26 rotates), while when the device 14 is not in working phase, the two semijoints 32 and 33 are detached and the first screw 32 is without motorisation and stops immediately, blocked by the brake 35.

The meshing device 14, with the semijoints 32 and 33, the cogged pulley 36, the electromagnetic brake 35 and the cogged belt 36 constitute a means for rendering the movement of the two screw 27 and 28 independent of each other.

The possibility of independent activation of the first and second screws 27 and 28 permits the programmed feeding of the drawing elements 19 (said feeding being regulated by means of numerical control devices substantially of known type and not illustrated), in such a way that not all of the said elements 19 are "loaded".

The storage chest 10 comprises a support frame equipped with a plurality of vertical uprights and crossbars interplaced between the chambers 11, which crossbars create "neutral" zones, where on the corresponding sections of the mobile car 1 there should not be containers 5.

The two independent screws 27 and 28 permit thus of staggering the containers 5 ensuring that some pre-established elements 19 of the drawing mechanism stay empty, that is without containers 5.

The feeding device illustrated in figure 5 obviates the use of the pneumatic cylinder 9, inasmuch as the containers 5 are automatically carried on the transporter 3 of the mobile car 1.

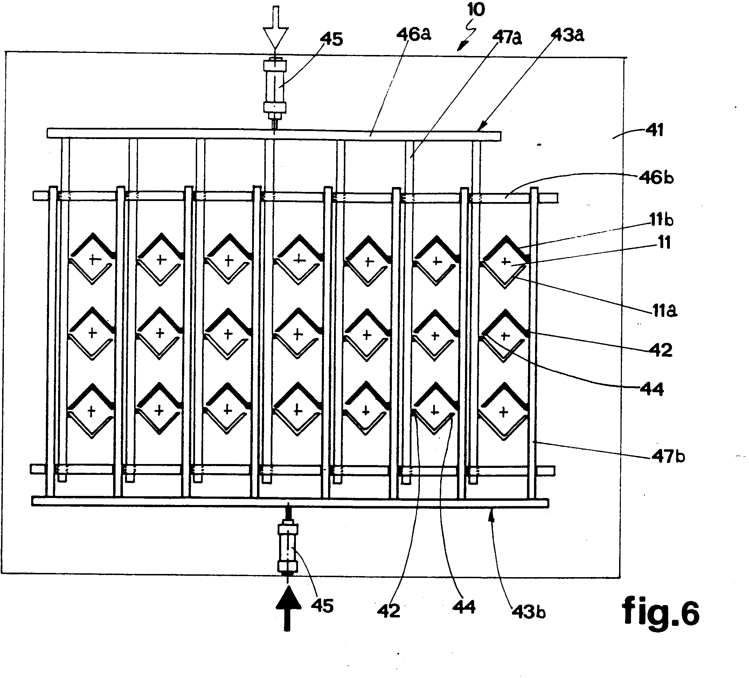

With reference to figures 6, 7 and 8, and in particular to figure 6, 41 denotes a support mounting in which all the vertical chambers 11 are uniformly distributed, which vertical chambers 11, according to ths embodiment, can be adapted for differently-shaped containers and can be adapted both for use with bottom-loading storage chests and with top-loading storage chests.

Each vertical chamber 11 comprises a first semipart 11a and a second semipart 11b, separate between themselves and respectively constrained to at least one first and to at least one second support frame 43a and 43b. The said support frames 43a and 43b are arranged internally to the support mount 41 and are mobile in predetermined directions on the command of activating means 45 operating between the support mount 41 and at least one of the support frames 43a and 43b themselves, which activating means 45 move the first semipart 11a and the second semipart 11b towards and away from each other.

In particular, the first and the second support frames 43a and 43b comprise respectively at least one longitudinal member 46a and 46b and a plurality of cross-members 47a and 47b, each of which is rigidly connected to at least one semipart of the vertical chamber 11.

The longitudinal members 46a and the cross-members 47a of the first support frame 43a are parallel with respect to the longitudinal member 46b and the cross-members 47b of the second support frame 13b. Furthermore, the support frames 43a and 43b are mobile in movement towards and away from each other according to the longitudinal development of the cross-members by means of the activating means 45 which comprises at least one jack performing the movement of at least one of the said support frames 43a and 43b.

The first semipart 11a and the second semipart 11b form a vertical chamber 11 having a substantially square section, as is clearly visible in figure 6, but since the semiparts 11a and 11b can also be of other shapes, the chambers 11 may also be of circular transversal shape, or rectangular, elliptical and so on.

Originally, according to the illustration of figure 6, each semipart 11a and 11b is composed of an angular element having a first end edge or corner fixed to the corresponding cross-member 47a and 47b and a second edge which is free, and exhibits a right-angled profile in which one end 42 of the profile is fixed to the corresponding cross-member 47a and 47b while the other end 44 is free.

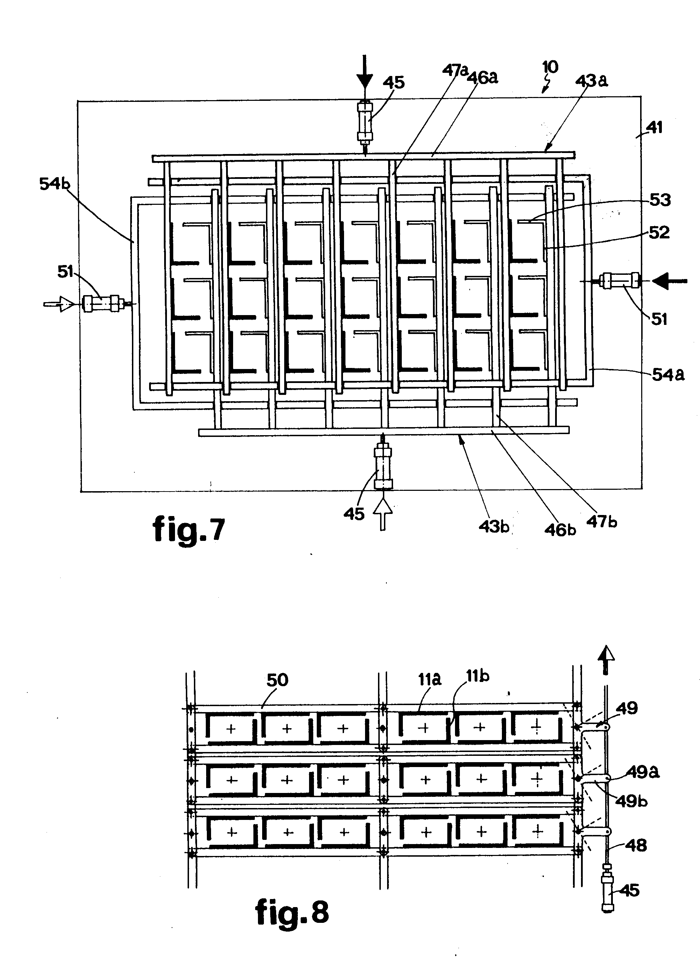

Similarly, in another embodiment, illustrated in figure 7, the first semipart 11a and the second semipart 11b form a vertical chamber 11 of substantially rectangular section in which each semipart 11a and 11b is composed of an angular element having a first side fixed to the corresponding cross-member 47a and 47b and a second side which is free and exhibits a substantially "L" is fixed to the corresponding cross-member 47a and 47b and the other arm 53 is free.

In particular, the support mounting 41 comprises a first and a second auxiliary frame 54a and 54b slidably bearing respectively the first and the second support frames 43a and 43b. The first and the second auxiliary frames 54a and 54b are mobile on the command of auxiliary activating means 51 operating between the support mounting 41 and the corresponding auxiliary frame 54a and 54b to perform the movement of the auxiliary frame 54a and 54b itself.

According to a further embodiment, illustrated in figure 8, both the first and the second frames exhibit a plurality of cross-members 50, each of which has at least one semipart 11a and 11b. The cross-members 50 are arranged parallel according to an alternated sequence and each of the first frames is connected to one of the second frames by means of connecting levers 49 hinged to the support mounting 41. The said frame behaves like a parallelogram which is deformable by means of activating means 45 which perform the movement of the said frame.

As is illustrated in figure 8, the activating means 45 comprise a jack which acts on a rod 48, which rod 48 moves one end 49a of at least one arm 49b projecting from one of the levers 49 to rotate it about its hinging point positioned on the frame.

The storage chest 10 is predisposed in such a way as to receive containers 5 of different shapes and dimensions by acting on the arrangement of the frames by means of the activating means, to enlarge or reduce the dimensions of the vertical chambers 11 by moving the semiparts constituting the chambers 11 while keeping the central axis of the said chambers the same.

This permits of obtaining, in quite a simple way, a considerable versatility of the storage chest, which permits of reducing the space necessary, the total number of chests necessary, and costs.

Unloading from the bottom in ordered storage chests is substantially embraced in the prior art.

The final novelty of the present invention lies instead in the loading of the said storage chests from below, and with the same means for performing the unloading operation, with the advantage of simplifying the storage chest overall and increasing its capacity without increasing its mass.

Indeed, loading from above, made generally with containers transported in horizontal position and turned upright only at the moment of introduction to the chambers, requires the use of rather expensive deployment guides, and furthermore needs and extra added free space above the storage chest to house the loading means.

A still further advantage of the present invention is provided by the fact that all of the mobile loading and unloading organs are easily accessible by an operator positioned at ground level, avoiding the use of steps and also avoiding the use of transporters to bring the containers into the upper loading position.

## Claims

1. An ordered storage chest for plastic containers, comprising a plurality of vertical chambers (11) identical among themselves, arranged according to a matrix configuration and destined to house a plurality of plastic containers (5) piled in upright position, characterised by the fact that it comprises means to perform the loading and the unloading of one or more rows of the said chambers (11) through the inferior opening of the said chambers (11).

2. An ordered storage chest as in claim 1, wherein the means to perform the loading and unloading of one or more rows of chambers (11) through the inferior opening of the said chambers (11) comprise:
   - one or more mobile cars (1), each of which cars (1) supports a transporter (3) of containers (5), which mobile car or cars (1) are destined both to bring the said containers (5) into a coaxial position beneath two possibly not adjacent rows of chambers (11), in order for the said containers (5) to be loaded into the said storage chest (10), and to receive the said containers (5) at the exit of the said chambers (11) for the unloading of the storage chests (10); each car (1) being equipped with means for causing the opening and the closing of the inferior part of the said chambers (11) for the loading and unloading of the said containers (5);
   - feeding and unloading means of the mobile cars (1).

3. Ordered storage chest as in claim 2, characterised by the fact that the said feeding and unloading means of the mobile cars (1) comprise:
   - a pneumatic cylinder (9) to push single containers (5) on to the said transporter (3) of a mobile car (1) when a stop (7), which stop (7) is commanded by a lever (8) by ameans of a pneumatic cylinder (12), halts the said containers (5) which arrive in the proximity of the said car (1);
   - an extractor (38) to lift the single containers (5) from the said transporter (3) in order to position them as they leave the mobile car (1), by the use of a guide or deviator (39).

4. An ordered storage chest as in claim 1, characterised by the fact that it comprises a plurality of identical vertical chambers (11) superiorly closed.

5. An ordered storage chest as in claim 2, comprising a feeding device for the mobile cars (1) constituted by:
- a motorised chain (22) equipped with drawing elements (19) of the said containers (5), to bring the said containers (5) on to the transporter (3) of each mobile car (1);
- a device having two independent Archimedes' screws (27) and (28), driven by the same motorisation as the chain (22), and destined to feed the said drawing elements (19) according to a pre-established and programmable non-uniform distribution;
- means for rendering independent the movement of the two said screws (27) and (28).

6. An ordered storage container as in claim 5, wherein the said means for rendering independent the movement of the said two Archimedes screws (27) and (28), comprise an electromagnetic brake-clutch meshing device (14), constituted by two clutch semijoints (32) and (33) of which one is keyed on a rotating shaft (26) which shaft (26) is kinematically connected to the second said Archimedes screw (28), while the other said clutch semijoint is solid to a cogged pulley (34) which pulley (34) sets in rotation, by means of a cogged chain (36), the said first Archimedes screw (27).

7. An ordered storage chest for plastic containers, comprising a plurality of vertical chambers (11), preferably identical among themselves, arranged according to a matrix configuration and destined to house a plurality of containers (5) made of plastic material and not, which containers (5) are piled in upright position, characterised by the fact that each said vertical chamber (11) comprises a first semipart (11a) and a second semipart (11b), separate between themselves, respectively constrained to at least a first and at least a second support frame (43a and 43b) arranged internally to a support mounting (41), said support frames (43a and 43b) being mobile according to pre-established directions on the command of activating means (45) for moving the first semipart (11a) and the second semipart (11b) towards and away from each other.

8. An ordered storage chest as in claim 7, wherein each said first and second support frames (43a and 43b) comprises at least one longitudinal member (46a and 46b) and a plurality of cross-members (47a and 47b), each of which is rigidly connected to at least one of the said first and second semiparts (11a and 11b) of the vertical chamber (11).

9. An ordered storage chest as in claim 7, wherein the said activating means (45), operating between the said support mounting (41) and at least one of the said support frames (43a and 43b) comprise at least one jack to perform the movement of at least one of the said support frames (43a and 43b).

10. An ordered storage chest according to claim 7, wherein the said first semipart (11a) and the said second semipart (11b) form a vertical chamber (11) of substantially square section.

11. A storage chest as in claim 10, wherein each said semipart (11a and 11b) is composed of an angular element having a first end edge constrained to a corresponding cross-member (47a and 47b) and a second free edge, each semipart (11a and 11b) exhibiting a right-angled profile in which one end (42) of the said profile is fixed to a corresponding cross-member (47a and 47b) and the other end (44) is free.

12. A storage chest as in claim 7, wherein each said first semipart (11a) and each said second semipart (11b) from a vertical chamber (11) of substantially rectangular section.

13. A storage chest as in claim 12, wherein each said semipart (11a and 11b) comprises an angular element having its first side constrained to a corresponding cross-member (47a and 47b) and a second side which is free, each semipart (11a and 11b) exhibiting a substantially "L" shaped profile in which one arm (52) of the said "L" shape is fixed to a corresponding cross-member and the other, remaining arm (53) is free.

14. A storage chest according to claim 7, wherein the said support mounting (41) comprises a first and a second auxiliary frame (54a and 54b) bearing slidably respectively the said first and second support frames (43a and 43b), said first and said second auxiliary frames (54a and 54b) being mobile on the command of auxiliary activating means (51) operating between the support mounting (41) and the corresponding auxiliary frame (54a and 54b) to perform the movement of the said auxiliary frames (54a and 54b).

15. A storage chest as in claim 8, wherein each of the said first and second support frames (43a and 43b) comprise a plurality of cross-members (50), each of which bears at least one semipart (11a and 11b) arranged parallel according to an alternated sequence, and each of which first support frames (43a) is connected to one of the said second frames (43b) by means of connecting levers

(49) hinged to the said support mounting (41), said frame behaving like a parallelogram which is deformable by means of activating means (45) which means (45) perform the movement of the said frame.

16. A storage chest as in claim 7, wherein the said activating means (45) comprise a jack which jack acts on a rod (48), which rod (48) moves one end (49a) of at least one arm (49b) projecting from one of the said levers (49) to rotate it about its hinging point positioned on the said frame.

fig.1

## fig.2

## fig.3

fig.4

fig.5

fig.6

EP 0 511 172 A1

**fig.7**

**fig.8**

14

EP 0 511 172 A1

<table>
<tr><td></td><td><strong>European Patent Office</strong></td><td><strong>EUROPEAN SEARCH REPORT</strong></td><td><strong>Application Number</strong></td></tr>
</table>

EP    92 83 0089

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3 651 968 (CLELAND) <br> * column 1, line 31 - column 2, line 12; figures 1-9 * | 1,4 | B65G47/51 <br> B65G1/04 <br> B67C7/00 |
| A |  | 7 |  |
| A | US-A-3 964 619 (IRMLER) <br><br> * the whole document * | 1-3,7, 10-12 |  |

TECHNICAL FIELDS SEARCHED (Int. Cl.5 )

B65G
B67C

The present search report has been drawn up for all claims

| Place of search | Date of completion of the search | Examiner |
|---|---|---|
| BERLIN | 30 JULY 1992 | SIMON J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

15